**Europäisches Patentamt**

**European Patent Office**

**Office européen des brevets**

(19)

(11) Veröffentlichungsnummer: **0 154 882**

**B1**

(12)

# EUROPÄISCHE PATENTSCHRIFT

(45) Veröffentlichungstag der Patentschrift:
**16.12.87**

(51) Int. Cl.⁴: **F 16 G  13/16,** F 16 L  3/00

(21) Anmeldenummer: **85102087.5**

(22) Anmeldetag: **26.02.85**

(54)  **Energieführungskette.**

(30) Priorität: **28.02.84  DE 3407169**

(43) Veröffentlichungstag der Anmeldung:
**18.09.85 Patentblatt 85/38**

(45) Bekanntmachung des Hinweises auf die Patenterteilung:
**16.12.87 Patentblatt 87/51**

(84) Benannte Vertragsstaaten:
**AT BE CH DE FR GB IT LI NL SE**

(56) Entgegenhaltungen:
**EP-A-0 001 656**
**AT-B-335 334**
**DE-A-2 360 227**
**DE-B-2 045 899**
**US-A-3 448 954**

(73) Patentinhaber: **Kabelschlepp Gesellschaft mit beschränkter Haftung, Marienborner Strasse 75, D-5900 Siegen 1 (DE)**

(72) Erfinder: **Moritz, Werner, Wetzlarer Strasse 122, D-5900 Siegen 1 (DE)**
Erfinder: **Haschek, Friedrich, Im Hainchen 7, D-5900 Siegen (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

## Beschreibung

Gegenstand der Erfindung ist eine Energieführungskette für die Zufuhr von Verbrauchsmitteln aller Art durch Leitungen von einem festen Anschluß zu einem beweglichen Verbraucher, wobei die Leitungen in durchgehenden Innenräumen einer tragenden Gelenkkette angeordnet sind, die aus mit Stegen verbundenen Kettenlaschen besteht, und wobei zur Begrenzung des gegenseitigen Schwenkwinkels an jeder Kettenlasche um eine gemeinsame Gelenkachse sich erstreckende Langlöcher vorgesehen sind, in die Anschlagzapfen der benachbarten Kettenlasche eingreifen.

Eine Energieführungskette der vorstehend beschriebenen Gattung ist aus der DE-C-2 360 227 bekannt. Bei dieser bekannten Energieführungskette bestehen die Kettenlaschen aus zwei Laschenscheiben, die mit Verschlußbolzen zusammengehalten werden. Zur Begrenzung des gegenseitigen Schwankwinkels benachbarter Kettenlaschen sind Langlöcher vorgesehen, in die Anschlagzepfen der anderen Kettenlasche eingreifen. Bei der Montage benachbarter Kettenlaschen müssen jeweils drei Konstruktionsteile manipuliert werden, nämlich zwei zu einer Kettenlasche miteinander verbundene Laschenscheiben und die beiden Laschenscheiben der nächsten Kettenlasche, bevor die Verschlußbolzen eingesetzt werden können. Die dafür notwendigen Manipulationen sind einer Automatisierung nicht zugänglich.

Devon ausgehend liegt der Erfindung die Aufgabe zugrunde, eine einfach konstruierte Energieführungskette zu schaffen, deren Kettenlaschen automatisch montiert werden können und die große freitragende Längen überbrücken kann.

Zur technischen Lösung dieser Aufgabe wird vorgeschlagen, daß die Kettenlaschen einteilig ausgebildet sind, daß an einem Ende zu einer Seite hin die Langlöcher in einen scheibenförmigen Teller eingelassen und am anderen Ende zur entgegengesetzten Seite hin die Anschlagnocken am Boden eines Topfes angeformt sind, daß der Durchmesser des Tellers kleiner als der Durchmesser des Topfes ist, so daß der Teller der einen Kettenlasche in den Topf der anderen Kettenlasche einsetzbar ist, und daß am Boden des Topfes ein zentraler Gelenkzapfen angeformt und in dem Teller eine zentrale Gelenkbohrung eingeformt sind.

Bei einer praktischen Ausführungsform sollte der Durchmesser des Tellers um die doppelte Wandstärke einer Wand des Topfes kleiner als die Höhe der Kettenlasche sein, damit beide Teile mit geringem Spiel ineinendergesteckt werden können. Aus dem gleichen Grunde sollte die Höhe des Tellers geringfügig kleiner als die Tiefe des Topfes sein.

Die Verbindung benachbarter Kettenlaschen erfolgt mit dem zentralen Gelenkzapfen, der zweckmäßig am Boden des Topfes angeformt ist und in eine zentrale Gelenkbohrung des Tellers eingreifen kann. Um diese Montage automatisieran zu können, wird eine Schnappverbindung zwischen Gelenkzapfen und Gelenkbohrung vorgsachlagen. Diese Schnappverbindung kann mit durch Schlitze voneinander getrennten Sektoren am Gelenkzapfen und an deren Enden eingeformte radiale Nuten in Verbindung mit einem in der Gelenkbohrung in radialer Richtung nach innen vorspringenden Ring gelöst werden.

Zur Verstärkung von Energieführungeketten für größere Leitungsgewichte und/oder freitragende Längen wird vorgeschlagen, in die Gelenkzapfen besondere Gelenkbolzen aus Stahl einzusetzen. Es ist aber auch ohne weiteres möglich, die Gelenkverbindung zwischen benachbarten Kettenlaschen nur mit Gelenkbolzen aus Stahl zu lösen, die dann in zentrale Gelenkbohrungen an beiden Enden der Kettenlaschen eingesetzt werden.

Eine nach dieser technischen Lehre ausgebildete Energieführungskette hat den Vorteil, daß die Montage sehr einfach automatisiert werden kann, weil nur jeweils zwei Konstruktionsteile manipuliert werden müssen und, zumindest bei der Ausführungsform mit angeformten Gelenkzapfen, auch keine weiteren Konstruktionsteile für die Verbindung benötigt werden. Ein weiterer Vorteil besteht darin, daß die vorgeschlagene Energieführungskette aufgrund ihres Konstruktionsprinzips auch größere Leitungsgewichte aufnehmen und/oder größere freitragende Längen überbrücken kann, weil zusätzlich zu den einander anliegenden Flächen zwischen Gelenkzapfen und Gelenkbohrung, Langlöchern und Anschlagzapfen auch noch eine Abstützung zwischen den verhältnismäßig großen Flächen am Außenrand des Tellers und im Innenrand des Topfes erfolgt, so daß die spezifischen Flächenpressungen insgesamt kleiner sind als bei den bekannten Energieführungsketten.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäß ausgebildeten Energieführungskette in Ansichten und Schnitten schematisch dargestellt worden ist. In den Zeichnungen zeigen:

Fig. 1 eine zusammengesetzte Energieführungskette mit eingelegten Energieleitungen in Seitenansicht;

Fig. 2 dieselbe Energieführungskette in Draufsicht;

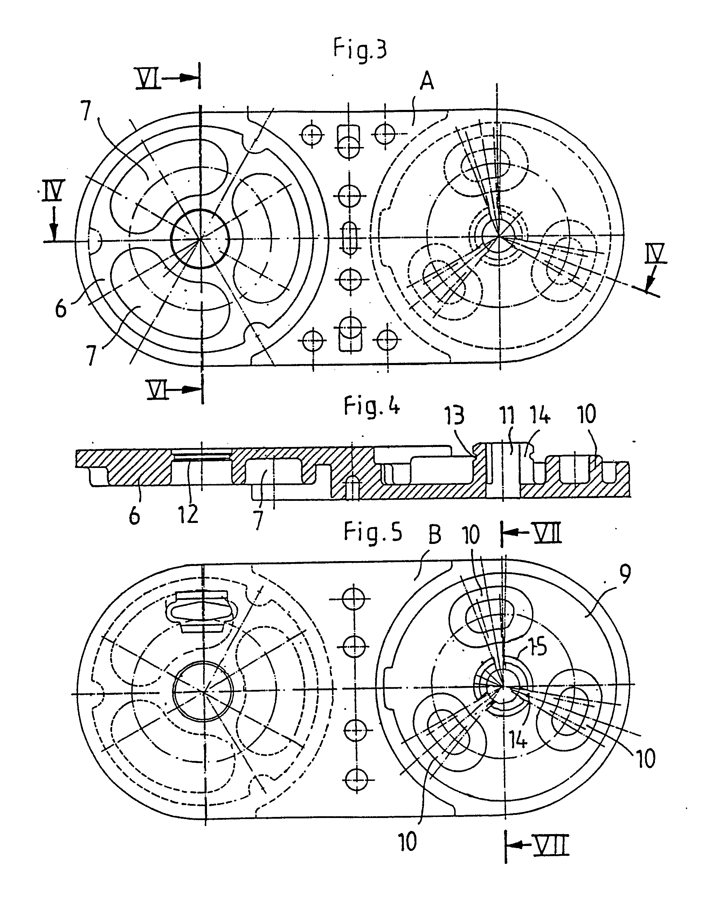

Fig. 3 eine Kettenlasche einer Energieführungskette mit freiliegenden Langlöchern in Ansicht;

Fig. 4 dieselbe Kettenlasche entlang der Linie IV-IV in Fig. 3 geschnitten in Draufsicht;

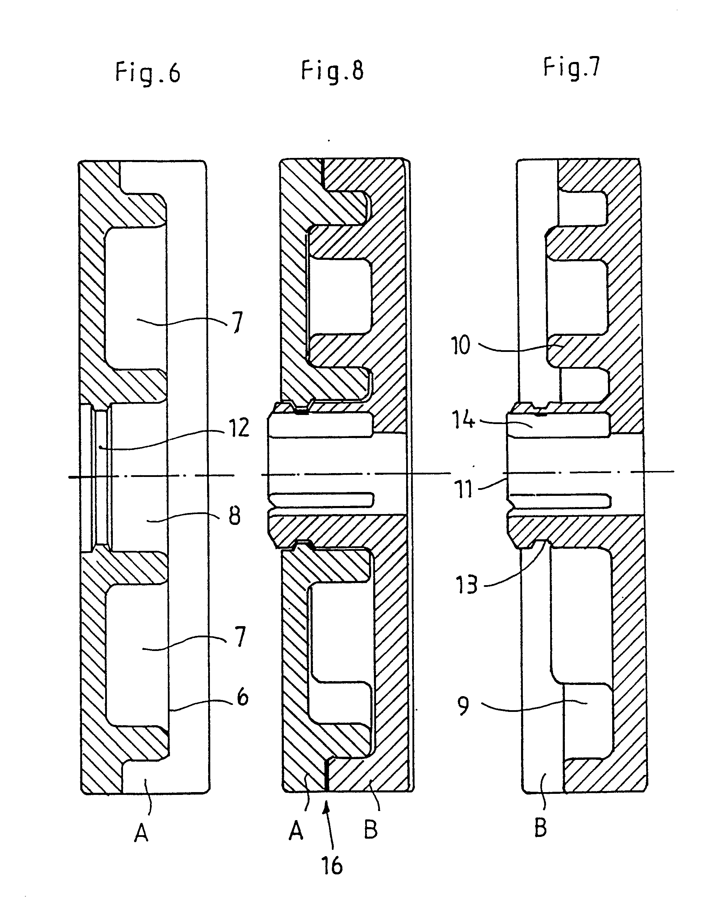

Fig. 5 eine andere Kettenlasche mit freiliegenden Anschlagzapfen in Seitenansicht;

Fig. 6 die in der Fig. 3 dargestellte Kettenlasche entlang der Linie VI-VI geschnitten in Stirnansicht;

Fig. 7 die in der Fig. 5 dargestellte Kettenlasche entlang der Linie VII-VII geschnitten in Stirnansicht;

Fig. 8 die beiden in den Fig. 3 und 5 dargestellten Kettenlaschen im zusammengesetzten Zustand und wie in den Fig. 6 und 7 geschnitten in Stirnansicht;

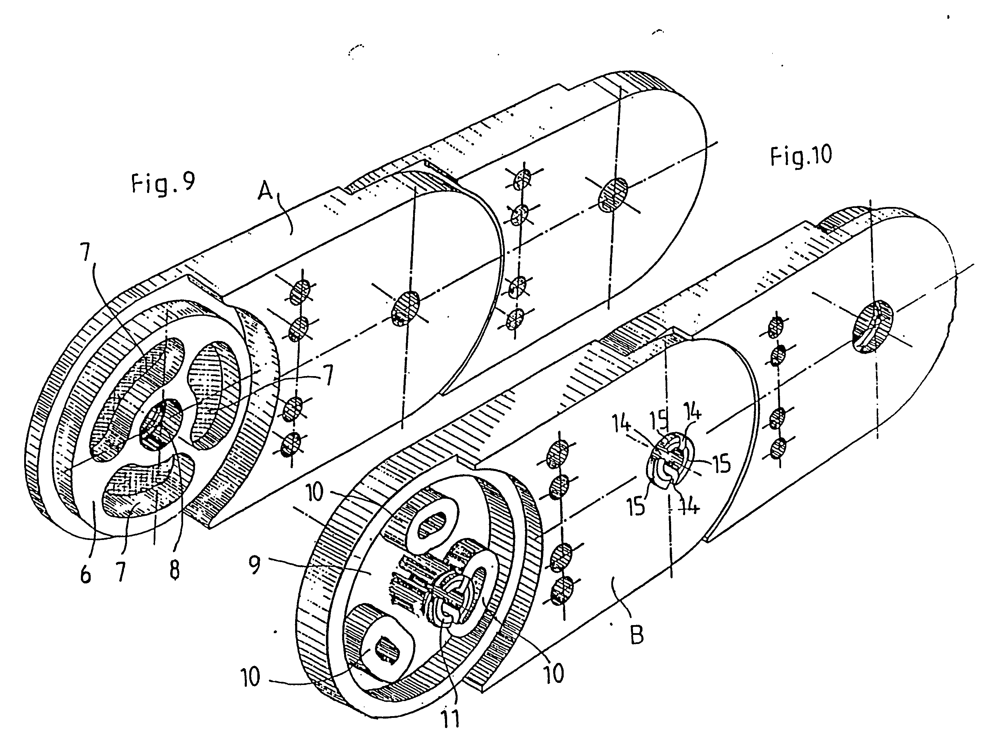

Fig. 9 zwei miteinander verbundene Kettenlaschen mit freiliegenden Langlöchern in perspektivischer Darstellung;

Fig. 10 zwei miteinander verbundene Kettenlaschen mit freiliegenden Anschlagzapfen in perspektivischer Darstellung.

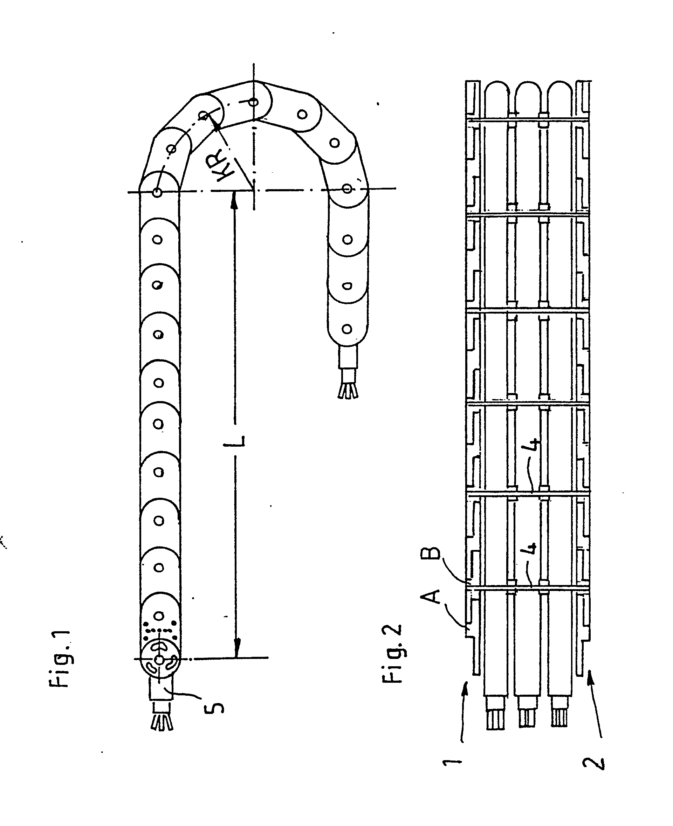

Die in den Fig. 1 und 2 dargestellte Energieführungskette besteht aus zwei im Abstand parallel zueinander verlaufenden Gelenkketten 1, 2, die durch Stege 4 miteinander verbunden sind. In durchgehenden Innenräumen der Stege 4 sind Energieleitungen 5 angeordnet, die einen festen Anschluß mit einem beweglichen Verbraucher verbinden. Durch die Konstruktion der Energieführungskette kann über einen Krümmungsradius KR eine freitragende Länge L überbrückt werden, ohne daß sich das obere Trum der Energieführungskette durchbiegt. Die Energieleitungen 5 werden zugentlastet und knickfrei mit der Bewegung des Verbrauchers hin- und herbewegt.

Jede Gelenkkette 1, 2, besteht aus einer Vielzahl von Kettenlaschen A, B, die alle konstruktiv gleich ausgebildet sind. Die Enden jeder Kettenlasche sind jedoch unterschiedlich ausgebildet, so daß ein Ende einer Kettenlasche mit dem anderen Ende einer anderen Kettenlasche verbunden werden kann.

Jede Kettenlasche A, B besitzt an einem Ende einen scheibenförmigen Teller 6 mit darin eingelassenen Langlöchern 7 und einer zentralen Gelenkbohrung 8. Am anderen Ende jeder Kettenlasche A, B ist auf der entgegengesetzten Seite ein kreisförmiger Topf 9 mit darin angeordneten Anschlagzapfen 10 und einem zentralen Gelenkzapfen 11 angeformt. Wenn das eine Ende der Gelenklasche A mit dem anderen Ende der Gelenklasche B verbunden wird, greifen der Teller 6 in den Topf 9 und in entgegengesetzter Richtung die Anschlagzapfen 10 in die Langlöcher 7. Außerdem greift der Gelenkzapfen 11 in die Gelenkbohrung 8. Damit die beiden Kettenlasche A und B sich nicht wieder voneinander lösen können, ist zwischen beiden eine Schnappverbindung vorgesehen.

Die Schnappverbindung zwischen den beiden Kettenlasche A und B besteht aus einem in der Gelenkbohrung 8 radial nach innen vorspringenden Ring 12 und einer in den Gelenkzapfen 11 eingelassenen Nut 13. Damit der Gelenkzapfen 11 elastisch verformbar ist und in die Gelenkbohrung 8 eingesetzt werden kann, besteht er aus mehreren durch Schlitze 14 voneinander getrennten Sektoren 15.

Die Länge der Langlöcher 7 und die Größe der Anschlagzapfen 10 bestimmen den maximalen Krümmungsradius KR der montierten Energieführungskette. Die Übertragung der Biegekräfte im Krümmungsbereich und oberen freitragenden Trum erfolgt von einer Kettenlasche A zur benachbarten Kettenlasche B über die aneinander anliegenden Außen- und Innenwände von Teller 6 und Topf 9, die Anschlagzapfen 10 und die Gelenkzapfen 11.

Die Kettenlaschen A und B können sowohl aus einem Kunststoff gespritzt als auch für besonders große Leitungsgewichte und/oder freitragende Längen aus Druckguß hergestellt werden.

Wenn es notwendig sein sollte, die Innenräume der Gelenkketten staubdicht auszubilden, kann zwischen Teller 6 und Topf 9 eine Dichtung 16 eingesetzt werden. Es ist aber auch möglich, zu dem gleichen Zweck die Berührungsflächen zwischen Teller 6 und Topf 9 mit einer - nicht dargestellten - Verzahnung zu versehen, so daß sich eine Art Labyrinthdichtung bildet.

Bezugszeichenliste
1 Gelenkkette
2 Gelenkkette
4 Steg
5 Energieleitung
6 Teller
7 Langloch
8 Gelenkbohrung
9 Topf
10 Anschlagzapfen
11 Gelenkzapfen
12 Ring
13 Nut
14 Schlitz
15 Sektor
16 Dichtung

A Kettenlasche
B Kettenlasche
L Länge (freitragende)
KR Krümmungsradius

**Patentansprüche**

1. Enereieführungskette für die Zufuhr von Verbrauchsmitteln aller Art durch Leitungen von einen festen Anschluß zu einem beweglichen Verbraucher, wobei die Leitungen in durchgehenden Innenräumen einer tragenden Gelenkkette (1, 2) angeordnet sind, die aus mit Stegen (4) verbundenen Kettenlaschen (A, B) besteht, und wobei zur Begrenzung des gegenseitigen Schwenkwinkels an jeder Kettenlasche (A) um eine gemeinsame Gelenkachse sich erstreckende Langlöcher (7) vorgeschen sind, in die Anschlagzapfen (10) der benachbarten Kettenlasche (B) eingreifen, dadurch gekennzeichnet, daß die Kettenlaschen (A, B) einteilig ausgebildet sind, daß an einem Ende zu einer Seite hin die Langlöcher (7) in einen scheibenförmigen Teller (6) eingelassen und am anderen Ende zur entgegengesetzten Seite hin die Anschlagzapfen (11) am Boden eines Topfes (9) angeformt sind, daß der Durchmesser des Tellers (6) kleiner als der Durchmesser des Topfes (9) ist, so daß der Teller (6) der einen Kettenlasche (A) in den Topf (9) der anderen Kettenlasche (B) einsetzbar ist, und daß am Boden des Topfes (9) ein zentraler Gelenkzapfen angeformt und in dem Teller eine zentrale Gelenkbohrung (8) eingeformt sind.

2. Energieführungskette nach Anspruch 1, dadurch gekennzeichnet, daß der Durchmesser des Tellers (6) um die doppelte Wandstärke einer Wand des Topfes (9) kleiner als die Höhe der Kettenlaschen (A, B) ist.

3. Energieführungskette nach den Ansprüche 1 und 2, dadurch gekennzeichnet, daß zwischem dem Teller (6) und einem Mittelteil der Kettenlaschen (A, B) eine Nut für den Eingriff der Wand des Topfes (9) vorgesehen ist.

4. Energieführungskette nach den Ansprüche 1 bis 3, dadurch gekennezeichnet, daß die Höhe des Tellers (6) kleiner als die Tiefe des Topfes (9) ist.

5. Energieführungskette nach Anspruch 1, dadurch gekennzeichnet, daß der Gelenkzapfen (11) aus durch Schlitze (14) voneinander getrennten Sektoren (15) besteht, die am freien Ende radiale Nuten (13) besitzen.

6. Energieführungskette nach den Ansprüchen 1 und 4, dadurch gekennzeichnet, daß in der Gelenkbohrung (8) ein radial nach innen verspringender Ring (12) angeordnet ist, der in die Nuten (13) einrastet.

7. Energieführungskette nach den Ansprüchen 1 bis 6 für größere Leitungsgewichte und/oder freitragende Längen, dadurch gekennzeichnet, daß in die hohl ausgebildeten Gelenkzapfen (11) Gelenkbolzen eingesetzt sind.

8. Energieführungskette nach den Ansprüchen 1 bis 4 für größere Leitungsgewichte und/oder freitragenden Längen, dadurch gekennzeichnet, daß im Teller (6) und im Topf (9) zentrale Gelenkbohrungen zum Einsetzen von Gelenkbolzen vorgeschen sind.

9. Energieführungskette nach den Ansprüche 1 bis 8, dadurch gekennzeichnet, daß zwischen den Außenrändern des Tellers (6) und des Topfes (9) eine Dichtung (16) eingesetzt ist.

10. Energieführungskette nach den Ansprüchen 1 bis 9, dadurch gekennzeichnet, daß die Kettenlaschen (A, B) aus Kunststoff oder Druckguß hergestellt sind.

**Claims**

1. An energy guide chain for supplying loads of all kinds by means of lines extending from a fixed connection to a movable load, the lines being disposed in continuous interiors of a supporting articulated chain (1, 2), which consists of chain links (A, B) connected to webs (4), slots (7) which extend around a common articulation axis being provided on each chain link (A) in order to limit the relative pivoting angle, the nipples (10) of the adjacent chain link (B) engaging in said slots (7), characterised in that the chain linke (A, B) are made in one piece, that at one end, towards one side, the slots (7) are recessed in a disc-shaped plate (6) and at the other end, towards the opposite side, the nipples (11) are formed at the base of a cup (9), that the diameter of the plate (6) is smaller than the diameter of the cup (9), so that the plate (6) of one chain link (A) is insertable into the cup (9) of the other chain link (B), and that a central articulation pin is formed at the base of the cup (9) and a central articulation bore (8) is formed in the plate.

2. An energy guide chain according to claim 1, characterised in that the diameter of the plate (6) is smaller than the height of the chain links (A, B) by an amount equal to twice the wall thickness of the cup (9).

3. An energy guide chain according to claims 1 and 2, characterised in that a groove for engagement of the wall of the cup (9) is provided between the plate (6) and a central part of the chain links (A, B).

4. An energy guide chain according to claims 1 to 3, characterised in that the height of the plate (6) is smaller than the depth of the cup (9).

5. An energy guide chain according to claim 1, characterised in that the articulation pin (11) consists of sectors (16) which are separated from one another by slots (14) and which have radial grooves (13) at the free end.

6. An energy guide chain according to claims 1 and 4 characterised in that a radially inwardly projecting ring (12) is disposed in the articulation bore (8) and engages in the grooves (13).

7. An energy guide chain according to claims 1 to 6, for relatively heavy line weights and/or unsupported lengths, characterised in that articulation bolts are inserted into the hollow articulation pins (11).

8. An energy guide chain according to claims 1 to 4, for heavy line weights and/or unsupported lengths, characterised in that central articulation bores for the insertion of articulation bolts are provided in the plate (6) and in the cup (9).

9. An energy guide chain according to claims 1 to 8, characterised in that a seal (16) is inserted between the outer edges of the plate (6) and of the cup (9).

10. An energy guide chain according to claims 1 to 9, characterised in that the chain links (A, B) are made from plastics or die-cast metal.

**Revendications**

1. Chaîne de guidage de conduites d'énergie pour l'amenée de fluides consommables de tous types par des conduites depuis un raccord fixe jusqu'à un apparail consommateur mobile, les conduites étant disposées dans des logements intérieurs continus d'une chaîne porteuse articulée (1, 2) consitutée de maillons (A, B) reliés par des traverses (4), des évidements allongés (7) s'étendant dans chaque maillon (A) autour d'un axe d'articulation commun et des tenons de butée (10) du maillon voisin (B) s'engageant dans ces évidaments pour limitar l'angle de rotation entre les maillons, caractérisée en ce que les maillons (A, B) sont réalisés en une seule pièce, en ce qu'à une extrémité, d'un c°oté, les évidements allongés (7) sont pratiqués dans un plateau (6) en forme de disque et à l'autre extrémité, du c°oté opposé, les tenons de butée (10) sont formés sur le fond d'une cuvette (9), en ce que le diamètre du plateau (6) est inférieur au diamètre de la cuvette (9), de sorte que le plateau (6) d'un maillon (A) puisse être introduit dans la cuvette (9) de l'autre maillon (B), et en ce que sur le fond de la cuvette (9) est formé un tourillon d'articulation central et dans le plateau est pratiqué un alesage d'articulation central (8).

2. Chaîne de guidage de conduites d'énergie selon la revendication 1, caractérisée en ce que le diamètre du plateau (6) est inférieur à la hauteur des maillons (A, B) du double de l'épaisseur d'une paroi de la cuvette (9).

3. Chaîne de guidage de conduites d'énergie selon la revendication 1, caractérisée en ce qu'une rainure pour l'engagement de la paroi de la cuvette est prévue entre le plateau (6) et une partie médiane des maillons (A, B).

4. Chaîne de guidage de conduites d'énergie selon les revendications 1 à 3, caractérisée en ce que la hauteur du plateau (6) est inférieure à la profondeur de la cuvette (9).

5. Chaîne de guidage de conduites d'énergie selon la revendication 1, caractérisée en ce que les tourillons d'articulation se composent de secteurs (15) séparés l'un de l'autre par des fentes (14), ces secteurs présentant des rainures annulaires (13) à leur extrémité libre.

6. Chaîne de guidage de conduites d'énergie selon les revendications 1 et 4 caractérisée en ce qu'une couronne en saillie (12) en direction radiale vers l'intérieur est disposée dans l'alésage d'articulation (8), cette couronne s'enclenchant dans les rainures (13).

7. Chaîne de guidage de conduites d'énergie selon les revendications 1 à 6 pour des poids de conduites élevés et/ou pour de grandes longueurs libres, caractérisée en ce que des axes d'articulation sont introduits dans les tourillons d'articulation (11) de réalisation creuse.

8. Chaîne de guidage de conduites d'énergie selon les revendications 1 à 4 pour des poids de conduites élevés et/ou pour de grandes longueurs libres, caractérisée en ce que des alésages d'articulation centraux sont prévus dans le plateau (6) et dans la cuvette (9) pour l'introduction d'axes d'articulation.

9. Chaîne de guidage de conduites d'énergie selon les revendications 1 à 8, caractérisée en ce qu'un joint d'étanchéité (16) est intercalé entre les bords extérieurs du plateau (6) et de la cuvette (9).

10. Chaîne de guidage de conduites d'énergie selon les revendications 1 à 9, caractérisée en ce que les maillons (A, B) sont fabriqués en matière plastique ou par moulage sous pression.

Fig.1

Fig.2

Fig.3

Fig.4

Fig.5

Fig.6 Fig.8 Fig.7

Fig.9

Fig.10